# EUROPÄISCHE PATENTSCHRIFT

(11) **EP 1 537 373 B1**
(45) Veröffentlichungstag und Bekanntmachung des Hinweises auf die Patenterteilung: **10.10.2018**
(21) Anmeldenummer: 03790877.9
(22) Anmeldetag: 07.08.2003
(51) Int. Cl.: F28F 21/06, F28F 9/02, F28F 19/06, F25B 39/04

(54) **KÄLTEMITTELKONDENSATOR, INSBESONDERE FÜR KRAFTFAHRZEUG-KLIMAANLAGEN**
REFRIGERANT CONDENSER, ESPECIALLY FOR MOTOR VEHICLE AIR CONDITIONING INSTALLATIONS
CONDENSATEUR DE RÉFRIGÉRANT, EN PARTICULIER POUR CLIMATISATIONS DE VÉHICULE AUTOMOBILE

(30) Priorität: 31.08.2002 DE 10240305
(43) Veröffentlichungstag der Anmeldung: 08.06.2005
(73) Patentinhaber: MAHLE Behr GmbH & Co. KG, 70469 Stuttgart (DE)
(72) Erfinder: FÖRSTER, Uwe, 71729 Erdmannhausen (DE); KASPAR, Martin, 70734 Fellbach (DE); WÖLK, Gerrit, 70180 Stuttgart (DE)
(74) Vertreter: Grauel, Andreas
(86) Internationale Anmeldenummer: PCT/EP2003/008772
(87) Internationale Veröffentlichungsnummer: WO 2004/020929

(56) Entgegenhaltungen:
- EP-A- 0 976 593
- AU-A- 7 590 094
- FR-A- 2 820 367
- US-A- 4 617 197
- US-A- 5 813 249
- US-A1- 2003 070 551
- PATENT ABSTRACTS OF JAPAN vol. 2000, no. 03, 30. März 2000 (2000-03-30) & JP 11 351710 A (ZEXEL:KK), 24. Dezember 1999 (1999-12-24)
- PATENT ABSTRACTS OF JAPAN vol. 2002, no. 06, 4. Juni 2002 (2002-06-04) & JP 2002 061778 A (BRIDGESTONE CORP), 28. Februar 2002 (2002-02-28)

## Beschreibung

Die Erfindung betrifft einen Kältemittelkondensator, insbesondere für Kraftfahrzeug-Klimaanlagen mit einem aus Flachrohren und Wellrippen bestehenden Wärmeübertragernetz und zumindest auf einer Seite oder beiderseits angeordneten Sammelrohren, die mit den Flachrohren in Fluidverbindung stehen, sowie mit einem neben einem der Sammelrohre (5) angeordneten Sammler, der vorzugsweise einen Trockner und/oder Filter in sich aufnimmt und über Überströmöffnungen mit dem benachbarten Sammelrohr in Fluidverbindung steht.

Solche Kondensatoren sind durch die DE 198 48 744 bekannt geworden. Der bekannte, gelötete Kondensator besteht aus einem Wärmeübertragernetz mit Wellrippen und Flachrohren, die mit ihren Enden in Sammelrohren befestigt sind und mit diesen in Fluidverbindung stehen. Parallel zu einem der Sammelrohre ist ein rohrförmiger Sammler angeordnet, welcher mit dem Sammelrohr über zwei Überströmöffnungen in Fluidverbindung steht und mit dem Sammelrohr stoffschlüssig, das heißt durch Lötverbindung verbunden ist. Der Sammler besteht in seinem oberen Teil aus einem geschweißten Rohr und in seinem unteren Teil, in welchem die Überströmöffnungen angeordnet sind, aus einem extrudierten Profil, welches durch einen Verschlussstopfen, das heißt ein lösbares Verschlußorgan verschlossen ist. Im Inneren des Sammlers ist eine Trockner/Filterpatrone angeordnet, welche mit dem Verschlussstopfen verrastet ist. Der gesamte Kondensator, bestehend aus Netz, Sammelrohren und Sammler wird "in einem Schuss" in einem Lötofen gelötet. Nach dem Lötprozess wird die aus einem Kunststoffkäfig bestehende Trockner/Filterpatrone in den Sammler eingesetzt. Der Sammler ist aufgrund seines zweiteiligen Aufbaues wegen erhöhtem Fertigungs- und Materialaufwand relativ teuer in der Herstellung und weist darüber hinaus ein relativ hohes Gewicht auf.

Durch die US-A 5,546,761 wurde ein ähnlicher gelöteter Kondensator mit einem Wärmeübertragernetz, beiderseits angeordneten Sammelrohren und einem Sammler bekannt, der kürzer als das benachbarte Sammelrohr ausgebildet und mit dem Sammelrohr unmittelbar über eine gemeinsame Kontaktfläche durch Lötung verbunden ist. Die Art der Verbindung zwischen Sammelrohr und Sammelbehälter macht eine Veränderung der Querschnitte von Sammelrohr und Sammler erforderlich, zum Beispiel durch eine Abflachung beider Querschnitte, damit die gemeinsame Kontaktfläche zur Verlötung geschaffen wird. Diese mechanische und stoffschlüssige Verbindung zwischen Sammelrohr und Sammler ist konstruktiv und fertigungstechnisch relativ aufwendig.

Dokument AU-A-75900/94 offenbart einen Sammler der zweistückig aus Kunststoff gebaut ist.

Dokument FR 2 820 367 offenbart einen Kondensator gemäß dem Oberbegriff des Anspruches 1. Es ist Aufgabe der vorliegenden Erfindung, die Herstellungskosten und das Gewicht für den eingangs genannten Kondensator zu reduzieren.

Die Lösung dieser Aufgabe ergibt sich aus den Merkmalen des Patentanspruches 1, wobei sich vorteilhafte Ausgestaltungen der Erfindung aus den Unteransprüchen ergeben.
Erfindungsgemäß ist der Sammler als ein einstückig hergestellter Behälter mit angeformten Stutzen für den Ein- und Austritt des Kältemittels ausgebildet. Die Einstückigkeit kann durch Spritzgießen, Fließpressen oder durch einen anderen Prozeß hergestellt werden, oder auch durch Herstellen eines geteilten Behälters, dessen Hälften anschließend miteinander verschweißt werden - dieses Verfahren ist insbesondere bei einem geschlossenen Behälter vorteilhaft. Aufgrund dieser erfindungsgemäßen Bauweise lassen sich Herstellkosten und Gewicht des Kondensators reduzieren.
In vorteilhafter Ausgestaltung der Erfindung wird der Behälter aus Kunststoff hergestellt, zum Beispiel als Kunststoffspritzteil; dabei lassen sich die Stutzen in beliebiger Form auf einfache Weise mit anspritzen. Ein Kunststoffbehälter ist leichter und mit geringeren Herstellkosten verbunden.

Bei einem Kunststoffbehälter ist es vorteilhaft, wenn dieser im Inneren mit einer Metallschicht überzogen wird, um die Permeabilität des Kunststoffes gegenüber dem Kältemittel zu reduzieren und eine größere Dichtheit des Behälters zu erzielen. Der Behälter kann als geschlossener oder offener Behälter ausgebildet sein, der an einem Ende durch einen Verschlussstopfen lösbar verschlossen werden kann. Dies hat den Vorteil, dass der im Sammler befindliche Trockner ausgetauscht werden kann.

Nach einer vorteilhaften Ausgestaltung der Erfindung weist das Sammelrohr im Bereich der Überströmöffnungen nach innen oder nach außen gerichtete Durchzüge auf, in welche die Stutzen des Sammelbehälters eingesetzt und mechanisch verankert sind, das heißt vorzugsweise durch eine Rastverbindung. Diese formschlüssige Verbindung nimmt die aus dem Kältemitteldruck resultierenden Kräfte auf, die auf den Sammelbehälter wirken. Damit ist der Behälter sicher am Sammelrohr befestigt. Zur Erzielung der erforderlichen Dichtheit zwischen Stutzen und Durchzügen sind die Außenflächen der Stutzen mit den Innenflächen der Durchzüge verklebt. Die Montage des Sammelbehälters mit dem Sammelrohr des Kondensators erfolgt nach dem Löten in der Weise, dass die Stutzen, welche endseitig angeordnete Vorsprünge aufweisen, in die Durchzüge eingesteckt werden, bis die Vorsprünge die Durchzüge hintergreifen und einrasten.

Nach einer vereinfachten Weiterbildung der Erfindung können die Durchzüge am Sammelrohr auch durch einfache Stanzlöcher ersetzt werden, was die Herstellkosten senkt.

Nach einer vorteilhaften Ausgestaltung der Erfindung kann der Behälter kürzer als das benachbarte Sammelrohr ausgebildet sein, insbesondere in seinem oberen, das heißt, den den Überströmöffnungen abgewandten Bereich. Dies hat den Vorteil, dass unmittelbar neben dem Sammelrohr Raum zur Verfügung steht, wo zum Beispiel die Kältemittelanschlüsse für den Kondensator angeordnet werden können, was Vorteile für bestimmte Varianten der Durchströmung des Kondensators bringt. Der Behälter kann im Übrigen auch in jeder beliebigen Winkelposition im Bezug auf das Sammelrohr angeordnet werden, je nachdem, wie dies die Einbaubedingungen im Kraftfahrzeug erfordern oder vorteilhaft erscheinen lassen.

Eine Trockner/Filterpatrone kann ähnlich wie bei bekannten Sammlern eingesetzt und im Inneren des Behälters fixiert werden. Bei einem geschlossen ausgebildeten Behälter wird dieser zunächst als einseitig offener Behälter hergestellt und nach dem Einsetzen der Patrone durch eine aufgeschweißte Verschlusskappe verschlossen.

Besonders zweckmäßig ist es, wenn der Behälter aus metall- oder faserverstärktem Kunststoff hergestellt ist. Auch kann es vorteilhaft sein, wenn der Behälter auf seiner Innenseite mit einer Metallschicht ausgekleidet ist oder zumindest teilweise einen Innenbehälter oder eine Verstärkung aus Metall aufweist. Auch kann es vorteilhaft sein, wenn der Behälter innen und/oder außen zumindest teilweise mit einer Lackschicht überzogen hergestellt ist.

Vorteilhaft ist es, wenn das Sammelrohr Durchzüge oder Öffnungen aufweist, welche die Stutzen aufnehmen. Es kann dabei zweckmäßig sein, wenn die Durchzüge nach innen oder nach außen aus dem Sammelrohr ausgeformt sind und dass die Stutzen mit den Durchzügen oder Öffnungen eine Rast- bzw. Schnappverbindung bilden. Bei einem weiteren Ausführungsbeispiel kann es zweckmäßig sein, wenn die Stutzen Vorsprünge oder einen umlaufenden Rand aufweisen, die die Durchzüge oder Öffnungen hintergreifen. Besonders vorteilhaft ist es, wenn der Behälter mit dem Sammelrohr im Bereich der Stutzen durch eine Klebeverbindung abdichtend verbunden ist.

Ausführungsbeispiele der Erfindung sind in der Zeichnung dargestellt und werden im Folgenden näher beschrieben. Es zeigen
- Fig. 1: einen Kondensator mit einstückigem, geschlossenen Sammelbehälter,
- Fig. 2: einen einstückigen, offenen Sammelbehälter mit Verschlussstopfen und
- Fig. 3: eine weitere Ausführungsform für die Verbindung zwischen Stutzen und Durchzügen.

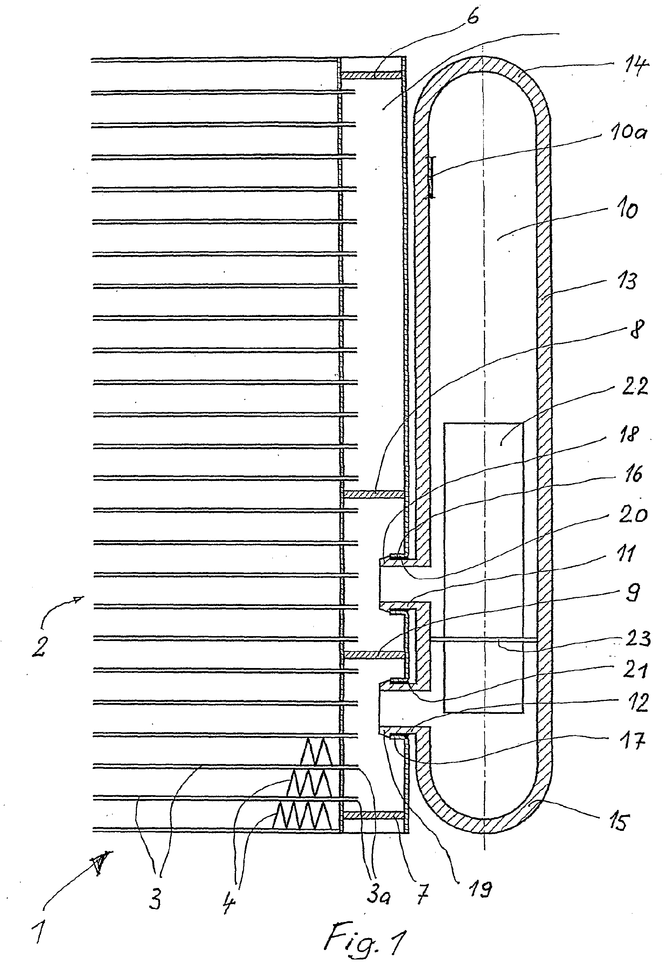

Fig. 1 zeigt einen Kondensator 1, bestehend aus einem Wärmeübertragernetz 2, aufgebaut aus Flachrohren 3 mit Rohrenden 3a sowie aus Wellrippen 4 zwischen den Flachrohren 3. Die Rohrenden 3a münden in ein Sammelrohr 5, welches nach oben und nach unten durch Deckel 6, 7 verschlossen und durch Trennwände 8, 9 unterteilt ist. Parallel zu dem Sammelrohr 5 ist ein länglich ausgebildeter, einstückig hergestellter Sammelbehälter, im Folgenden Behälter 10 genannt, angeordnet und an dem Sammelrohr 5 befestigt. Der Behälter 10 ist vorzugsweise als Kunststoffspritzteil hergestellt und hier als geschlossener Behälter ausgebildet, an welchen ein Einlassstutzen 11 und ein Auslassstutzen 12 angeformt sind. Der Behälter 10 weist ein hohlzylindrisch, vorzugsweise kreiszylindrisch ausgebildetes Mittelteil 13 auf, das endseitig durch je eine sphärisch ausgebildete Kappe 14, 15, vorzugsweise halbkugelförmige Kappe abgeschlossen wird. Diese Form kann sowohl einstückig (mit verlorenem Kern) oder aus zwei Kunststoffteilen hergestellt werden, die anschließend durch Schweißverbindung zu einem einstückigen, geschlossenen Behälter zusammengesetzt werden. Der Behälter 10 kann jedoch auch aus Metall einstückig hergestellt werden, zum Beispiel durch Druckguss oder Fließpressen. Der aus Kunststoff hergestellte Behälter 10 kann auf seiner Innenseite vollständig mit einer dünnen Metallschicht ausgekleidet sein, was durch einen Ausschnitt 10a der Metallschicht angedeutet ist. Durch diese metallische Beschichtung wird die Permeabilität des Kunststoffes gegenüber Kältemittel reduziert, und der Behälter 10 wird dichter. Am Sammelrohr 5 sind im Bereich der Stutzen 11, 12 nach innen, das heißt zu den Rohrenden 3a gerichtete Durchzüge 16, 17 ausgeformt, in welche die Stutzen 11, 12 eingesetzt sind. Letztere weisen endseitig Vorsprünge 18, 19 auf, welche die Durchzüge 16, 17 derart hintergreifen, dass eine Rastverbindung hergestellt ist und ein Herausziehen oder Hinausdrücken des Behälters 10 aus den Durchzügen durch den Formschluss verhindert wird. Zwischen den Durchzügen 16, 17 und der Außenfläche der Stutzen 11, 12 ist eine Klebschicht 20, 21 vorgesehen, welche die Abdichtung des Behälters 10 mit seinen Stutzen 11, 12 gegenüber dem Sammelrohr 5 gewährleistet. Im Inneren des Behälters 10 ist - lediglich angedeutet - eine Trockner/Filterpatrone 22 eingesetzt, die mittels einer Halterippe 23 gegenüber dem Behälter 10 fixiert ist, zum Beispiel durch Einschweißen, Einklemmen oder Einsetzen in eine (nicht dargestellte) Ringnut. Für das Einsetzen der Trocknerpatrone 22 wird der Behälter 10 zunächst offen hergestellt und anschließend durch eine Kappe 14 oder 15 verschlossen.

Die Form des Behälters 10 kann von der in der Zeichnung dargestellten Form abweichen, beispielsweise kann der Behälter 10 kürzer als das benachbarte Sammelrohr 5 ausgebildet sein, wodurch zum Beispiel im oberen Bereich des Sammelrohres 5 seitlich Raum gewonnen wird, um zum Beispiel die Kältemittelanschlüsse des Kondensators 1 in diesem Bereich anzuordnen. Der Behälter kann auch im Querschnitt beliebig verändert, d. h. auch an die Einbaubedingungen im Kraftfahrzeug angepaßt werden. Schließlich können an den Behälter auch Befestigungs-, Halte-, Führungs- oder Versteifungselemente mit angespritzt oder angegossen werden - ein Vorteil der einstückigen bzw. einteiligen Bauweise.

Die Montage des gesamten Kondensators 1 erfolgt in der Weise, dass der Kondensator 1 zunächst mit Wärmeübertragernetz 2 und Sammelrohren 5 komplett gelötet wird. Nach dem Lötprozess wird der vorzugsweise aus Kunststoff hergestellte Behälter 10 mit seinen Stutzen 11, 12, auf welche außen die Klebschicht 20, 21 aufgetragen ist, in die Durchzüge 16, 17 hineingedrückt, bis die Vorsprünge 18, 19 die Durchzüge 16, 17 hintergreifen.

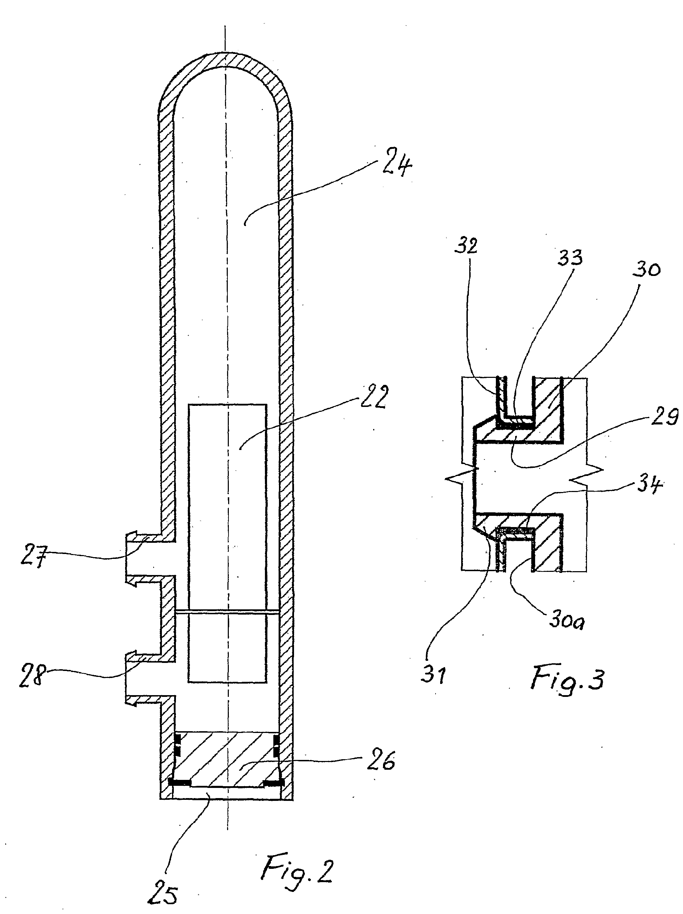

Fig. 2 zeigt eine weitere Ausbildungsform eines einstückig hergestellten Sammelbehälters 24, der an einer Stirnseite 25 offen ist und durch einen lösbaren Verschlussstopfen 26 verschlossen ist. Einzelheiten eines solchen Verschlussstopfens 26 sind in der DE-A 100 39 260 der Anmelderin ausführlich beschrieben. Der Behälter 24 weist - ebenso wie der in Fig. 1 dargestellte Behälter 10 - zwei Stutzen, einen Eintrittsstutzen 27 und einen Austrittsstutzen 28 auf, die in gleicher Weise ausgebildet und einstückig mit dem übrigen Behälter 24 verbunden sind. Die im Inneren des Behälters 24 angeordnete Trocknerpatrone 22 kann aufgrund des lösbaren Verschlusses 26 ausgetauscht werden.

Fig. 3 zeigt eine weitere Ausführungsform für die Ausbildung der Durchzüge am Sammelrohr, und zwar dargestellt als Einzelheit. Ein Stutzen 29 ist einstückiger Bestandteil eines Behälters 30 und weist - wie bei den vorherigen Ausführungsbeispielen - an seiner Stirnseite einen umlaufenden Vorsprung 31 auf. Ein Sammelrohr 32 weist einen nach außen gerichteten Durchzug 33 auf, der sich zwischen dem Vorsprung 31 und der Außenwand 30a des Behälters 30 erstreckt. Insofern wirkt dieser nach außen gerichtete Durchzug 33 gleichzeitig als Abstandshalter zwischen dem Sammelbehälter 30 und dem Sammelrohr 32. Zwischen Durchzug 33 und Stutzen 29 ist ebenfalls eine Klebschicht 34 zur Herstellung der erforderlichen Kältemitteldichtheit eingebracht.

Nicht dargestellt in der Zeichnung ist eine weitere Variante, bei welcher die zuvor erwähnten Durchzüge entfallen - statt dessen werden im Sammelrohr kreisförmige, ausgestanzte Öffnungen vorgesehen, in welche die Stutzen des Behälters eingesteckt und dort mechanisch verankert und abgedichtet werden.

## Patentansprüche

1. Kältemittelkondensator (1), insbesondere für Kraftfahrzeug-Klimaanlagen, mit einem aus Flachrohren (3) und Wellrippen (4) bestehenden Wärmeübertragernetz und zumindest auf einer Seite oder beiderseits angeordneten Sammelrohren (5), die mit den Flachrohren in Fluidverbindung stehen, sowie mit einem neben einem der Sammelrohre angeordneten Sammler, der einen Behälter (10) bildet und einen Trockner (22) und/oder Filter in sich aufnimmt und über im Behälter (10) vorgesehenen Überströmöffnungen mit dem benachbarten Sammelrohr in Fluidverbindung steht, **dadurch gekennzeichnet, dass** der Behälter des Sammlers aus Kunststoff hergestellt ist, wobei der Behälter (10) des Sammlers einstückig ausgebildet ist.

2. Kondensator nach Anspruch 1, **dadurch gekennzeichnet, dass** der Behälter mit angeformten Stutzen (11,12) ausgebildet ist.

3. Kondensator nach Anspruch 1 oder 2, **dadurch gekennzeichnet, dass** der Behälter mit angeformten Stutzen ausgebildet ist und dass die Stutzen (11,12) die Überströmöffnungen bilden.

4. Kondensator nach Anspruch 1, 2 oder 3, **dadurch gekennzeichnet, dass** der Behälter (10) mittels der angeformten Stutzen mit dem Sammelrohr verbunden ist.

5. Kondensator nach einem der vorhergehenden Ansprüche, **dadurch gekennzeichnet, dass** der Behälter (10) aus metall- oder faserverstärktem Kunststoff hergestellt ist.

6. Kondensator nach einem der vorhergehenden Ansprüche, **dadurch gekennzeichnet, dass** der Behälter (10) auf seiner Innenseite zumindest teilweise einen Innenbehälter oder eine Verstärkung aus Metall aufweist.

7. Kondensator nach einem der vorhergehenden Ansprüche, **dadurch gekennzeichnet, dass** der Behälter (10) innen und/oder außen zumindest teilweise mit einer Lackschicht überzogen hergestellt ist.

8. Kondensator nach einem der vorhergehenden Ansprüche, **dadurch gekennzeichnet, dass** der Behälter (10) als geschlossener Behälter ausgebildet ist.

9. Kondensator nach einem der vorhergehenden Ansprüche, **dadurch gekennzeichnet, dass** der Behälter eine längliche Form vorzugsweise mit einem hohlzylindrischen Mittelteil aufweist, dessen Enden durch vorzugsweise sphärisch ausgebildete, angeformte oder angeschweißte Kappen (14,15) abgeschlossen sind.

10. Kondensator nach einem der vorhergehenden Ansprüche, **dadurch gekennzeichnet, dass** der Behälter (10) als zumindest einseitig offener, mit einem Verschlussorgan verschließbarer Behälter ausgebildet ist.

11. Kondensator nach einem der vorhergehenden Ansprüche, **dadurch gekennzeichnet, dass** das Sammelrohr Durchzüge (16,17) oder Öffnungen aufweist, welche die Stutzen aufnehmen.

12. Kondensator nach einem der vorhergehenden Ansprüche, **dadurch gekennzeichnet, dass** die Durchzüge (16,17) nach innen oder nach außen aus dem Sammelrohr ausgeformt sind und dass die Stutzen (11,12) mit den Durchzügen (16,17) oder Öffnungen eine Rast- bzw. Schnappverbindung bilden.

13. Kondensator nach einem der vorhergehenden Ansprüche, **dadurch gekennzeichnet, dass** die Stutzen Vorsprünge (18,19) oder einen umlaufenden Rand aufweisen, die die Durchzüge oder Öffnungen hintergreifen.

14. Kondensator nach einem der vorhergehenden Ansprüche, **dadurch gekennzeichnet, dass** der Behälter (10) mit dem Sammelrohr im Bereich der Stutzen durch eine Klebeverbindung abdichtend verbunden ist.

15. Kondensator nach einem der vorhergehenden Ansprüche, **dadurch gekennzeichnet, dass** der Behälter (10) angeformte Befestigungselemente aufweist.

16. Kondensator nach einem der vorhergehenden Ansprüche, **dadurch gekennzeichnet, dass** der Behälter (10) hinsichtlich seiner Längserstreckung kürzer als das benachbarte Sammelrohr ausgebildet ist.

17. Kondensator nach einem der vorhergehende Ansprüche, **dadurch gekennzeichnet, dass** der Trockner und/oder Filter als Patrone (22) ausgebildet und im Behälter eingeklebt, eingeschweißt, eingeklemmt oder eingerastet ist.

## Claims

1. A refrigerant condenser (1), in particular for vehicle air-conditioning systems, with a heat exchanger network consisting of flat tubes (3) and corrugated ribs (4) and manifolds (5) which are arranged on at least one side or on both sides and are fluidly connected to the flat tubes, as well as a collector which is arranged next to one of the manifolds, forms a container (10) and receives a dryer (22) and/or filter and is fluidly connected to the adjacent manifold via overflow openings provided in the container (10), **characterised in that** the container of the collector is made of plastic, wherein the container (10) of the collector is designed as one piece.

2. The condenser according to claim 1, **characterised in that** the container is designed with preformed studs (11, 12).

3. The condenser according to claim 1 or 2, **characterised in that** the container is designed with preformed studs and that the studs (11, 12) form the overflow openings.

4. The condenser according to claim 1, 2 or 3, **characterised in that** the container (10) is connected to the manifold by means of the preformed studs.

5. The condenser according to one of the preceding claims, **characterised in that** the container (10) is made of metal- or fibre-reinforced plastic.

6. The condenser according to one of the preceding claims, **characterised in that** the container (10) at least partially has an internal container or a metal reinforcement on its inside.

7. The condenser according to one of the preceding claims, **characterised in that** the container (10) is made so as to be at least partially coated with a lacquer layer inside and/or outside.

8. The condenser according to one of the preceding claims, **characterised in that** the container (10) is designed as a closed container.

9. The condenser according to one of the preceding claims, **characterised in that** the container has an elongate shape preferably with a hollow-cylindrical centre part whose ends are closed by preferably spherically designed, preformed or welded caps (14, 15) .

10. The condenser according to one of the preceding claims, **characterised in that** the container (10) is designed as an at least partially open container which can be closed by a closure element.

11. The condenser according to one of the preceding claims, **characterised in that** the manifold has passages (16, 17) or openings which receive the studs.

12. The condenser according to one of the preceding claims, **characterised in that** the passages (16, 17) are designed to the inside or to the outside of the manifold and **in that** the studs (11, 12) form a latching or snap connection with the passages (16, 17) or openings.

13. The condenser according to one of the preceding claims, **characterised in that** the studs have protrusions (18, 19) or a peripheral edge which engage behind the passages or openings.

14. The condenser according to one of the preceding claims, **characterised in that** the container (10) is sealingly connected to the manifold in the region of the studs by means of an adhesive connection.

15. The condenser according to one of the preceding claims, **characterised in that** the container (10) has preformed fixation elements.

16. The condenser according to one of the preceding claims, **characterised in that** the container (10) is designed shorter than the adjacent manifold with regard to its longitudinal extension.

17. The condenser according to one of the preceding claims, **characterised in that** the dryer and/or filter are designed as a cartridge (22) and glued, welded, clamped or latched into the container.

## Revendications

1. Condenseur (1) de fluide frigorigène, en particulier pour des systèmes de climatisation de véhicules automobiles, comprenant un réseau d'échangeurs de chaleur se composant de tubes plats (3) et d'ailettes ondulées (4), et comprenant des tubes collecteurs (5) disposés au moins sur un côté ou des deux côtés, tubes collecteurs qui sont en communication fluidique avec les tubes plats, comprenant également un collecteur disposé à côté de l'un des tubes collecteurs, lequel collecteur forme un réservoir (10) et loge à l'intérieur de celui-ci un déshydrateur (22) et / ou un filtre, et est en communication fluidique avec le tube collecteur contigu, par des ouvertures de trop-plein prévues dans le réservoir (10), **caractérisé en ce que** le réservoir du collecteur est fabriqué en matière plastique, où le réservoir (10) du collecteur est configuré de façon monobloc.

2. Condenseur selon la revendication 1, **caractérisé en ce que** le réservoir est configuré en ayant des tubulures moulées (11, 12).

3. Condenseur selon la revendication 1 ou 2, **caractérisé en ce que** le réservoir est configuré en ayant des tubulures moulées, et **en ce que** les tubulures (11, 12) forment les ouvertures de trop-plein.

4. Condenseur selon la revendication 1, 2 ou 3, **caractérisé en ce que** le réservoir (10) est relié au tube collecteur au moyen des tubulures moulées.

5. Condenseur selon l'une quelconque des revendications précédentes, **caractérisé en ce que** le réservoir (10) est fabriqué dans une matière plastique renforcée par du métal ou par des fibres.

6. Condenseur selon l'une quelconque des revendications précédentes, **caractérisé en ce que** le réservoir (10) présente, sur son côté intérieur, au moins partiellement un réservoir intérieur ou un renforcement en métal.

7. Condenseur selon l'une quelconque des revendications précédentes, **caractérisé en ce que** le réservoir (10) est fabriqué en étant recouvert, à l'intérieur et / ou à l'extérieur, au moins partiellement d'une couche de vernis.

8. Condenseur selon l'une quelconque des revendications précédentes, **caractérisé en ce que** le réservoir (10) est configuré comme un réservoir fermé.

9. Condenseur selon l'une quelconque des revendications précédentes, **caractérisé en ce que** le réservoir présente une forme allongée, de préférence en ayant une partie centrale cylindrique creuse dont les extrémités sont fermées par des capuchons (14, 15), moulés ou soudés, ayant une forme de préférence sphérique.

10. Condenseur selon l'une quelconque des revendications précédentes, **caractérisé en ce que** le réservoir (10) est conçu comme un réservoir ouvert au moins sur un côté et pouvant être fermé avec un élément de fermeture.

11. Condenseur selon l'une quelconque des revendications précédentes, **caractérisé en ce que** le tube collecteur présente des passages (16, 17) ou ouvertures qui logent les tubulures.

12. Condenseur selon l'une quelconque des revendications précédentes, **caractérisé en ce que** les passages (16, 17) sont formés, vers l'intérieur ou vers l'extérieur, à partir du tube collecteur, et **en ce que** les tubulures (11, 12) forment, avec les passages (16, 17) ou ouvertures, un assemblage par encliquetage ou à déclic.

13. Condenseur selon l'une quelconque des revendications précédentes, **caractérisé en ce que** les tubulures présentent des parties saillantes (18, 19) ou un bord périphérique, lesquelles parties saillantes pénètrent dans les passages ou ouvertures.

14. Condenseur selon l'une quelconque des revendications précédentes, **caractérisé en ce que** le réservoir (10) est relié au tube collecteur, dans la zone des tubulures, par un assemblage collé assurant l'étanchéité.

15. Condenseur selon l'une quelconque des revendications précédentes, **caractérisé en ce que** le réservoir (10) présente des éléments de fixation moulés.

16. Condenseur selon l'une quelconque des revendications précédentes, **caractérisé en ce que** le réservoir (10) est configuré, concernant son étendue longitudinale, en étant plus court que le tube collecteur contigu.

17. Condenseur selon l'une quelconque des revendications précédentes, **caractérisé en ce que** le déshydrateur et / ou le filtre, qui est conçu comme une cartouche (22), est collé, soudé, bloqué ou encliqueté dans le réservoir.
